# EUROPEAN PATENT APPLICATION

(11) **EP 4 576 916 A1**
(43) Date of publication of application: **25.06.2025**
(21) Application number: 23842113.5
(22) Date of filing: 30.06.2023
(51) Int. Cl.: H04W 74/08

(54) **CONTENTION WINDOW ADJUSTMENT METHOD AND TERMINAL**

(30) Priority: 20.07.2022 CN 202210864261
(71) Applicant: Vivo Mobile Communication Co., Ltd., Dongguan, Guangdong 523863 (CN)
(72) Inventor: JIANG, Lei, Dongguan, Guangdong 523863 (CN)
(74) Representative: Germain Maureau
(86) International application number: PCT/CN2023/105387
(87) International publication number: WO 2024/017048

(57) **Abstract**

This application relates to the field of communications technologies, and discloses a contention window adjustment method and a terminal. The contention window adjustment method of embodiments of this application includes: adjusting a contention window size CWS based on a first transmission or a feedback of a transmission within a first reference duration when a terminal accesses a channel by means of Typel channel access, where the first reference duration includes the first transmission and/or a second transmission, and the first transmission or the second transmission includes at least one of the following: a sidelink SL transmission based on a blind retransmission mechanism; a channel state information CSI request or an inter-user equipment coordination request transmission; a physical sidelink feedback channel PSFCH transmission or a sidelink synchronization signal block S-SSB transmission; a NACK-only groupcast transmission; an ACK/NACK based groupcast transmission; and a physical sidelink shared channel PSSCH unicast transmission.

## Description

### CROSS-REFERENCE TO RELATED APPLICATIONS

This application claims priority to Chinese Patent Application No. 202210864261.2, filed on July 20, 2022 and entitled "CONTENTION WINDOW ADJUSTMENT METHOD AND TERMINAL", which is incorporated herein by reference in its entirety.

### TECHNICAL FIELD

This application relates to the field of communications technologies, and in particular, to a contention window adjustment method and a terminal.

### BACKGROUND

In future communication systems, an unlicensed band (unlicensed band) may be used as a supplement to a licensed band (licensed band) to help operators expand services. To maintain consistency with the deployment of a new radio (New Radio, NR) system and maximize unlicensed access based on the NR system, the unlicensed band may operate in bands such as 5 GHz, 37 GHz, and 60 GHz. A large bandwidth (80 MHz or 100 MHz) of the unlicensed band can reduce implementation complexity of a base station (gNB) and a terminal (User Equipment, UE). However, the unlicensed band is shared by a plurality of radio access technologies (Radio Access Technology, RAT), such as wireless fidelity Wi-Fi, radar, and long term evolution license assisted access (Long Term Evolution License Assisted Access, LTE-LAA). Therefore, the unlicensed band needs to comply with some rules (regulation) such as listen before talk (Listen Before Talk, LBT) and maximum channel occupancy time (Maximum Channel Occupancy Time, MCOT) during use to ensure that all devices may use the resource fairly.

When a contention window size (Contention Window Size, CWS) of a sidelink (sidelink, SL, or translated as secondary link, side link, edge link, and the like) transmission channel is adjusted in the unlicensed band, a definition of a corresponding reference duration (reference duration) needs to be determined. However, for characteristics in the SL transmission, for example, a situation of no feedback or a special feedback during blind retransmission, PSFCH transmission, and groupcast (groupcast) transmission in the SL, no corresponding rule or method for adjusting a CWS is proposed in the related art.

### SUMMARY

Embodiments of this application provide a contention window adjustment method and a terminal, which can resolve a problem of CWS adjustment of SL transmission in an unlicensed band.

According to a first aspect, a contention window adjustment method is provided, which is applied to a terminal. The method includes:
adjusting a contention window size CWS based on a first transmission or a feedback of a transmission within a first reference duration when a terminal accesses a channel by means of Type1 channel access.

The first reference duration includes the first transmission and/or a second transmission.

The first transmission or the second transmission includes at least one of the following:
a sidelink SL transmission based on a blind retransmission mechanism;
a channel state information CSI request transmission or an inter-user equipment coordination request transmission;
a physical sidelink feedback channel PSFCH transmission or a sidelink synchronization signal block S-SSB transmission;
a NACK-only groupcast transmission;
an ACK/NACK based groupcast transmission; and
a physical sidelink shared channel PSSCH unicast transmission.

According to a second aspect, a contention window adjustment apparatus is provided, including:
an adjustment unit, configured to adjust a contention window size CWS based on a first transmission or a feedback of a transmission within a first reference duration when a terminal accesses a channel by means of Type1 channel access.

The first reference duration includes the first transmission and/or a second transmission.

The first transmission or the second transmission includes at least one of the following:
a sidelink SL transmission based on a blind retransmission mechanism;
a channel state information CSI request transmission or an inter-user equipment coordination request transmission;
a physical sidelink feedback channel PSFCH transmission or a sidelink synchronization signal block S-SSB transmission;
a NACK-only groupcast transmission;
an ACK/NACK based groupcast transmission; and
a physical sidelink shared channel PSSCH unicast transmission.

According to a third aspect, a terminal is provided. The terminal includes a processor and a memory. The memory stores a program or an instruction executable in the processor. The program or the instruction, when executed by the processor, implements the steps of the method described in the first aspect.

According to a fourth aspect, a terminal is provided, including a processor and a communication interface. The processor is configured to adjust a contention window size CWS based on a first transmission or a feedback of a transmission within a first reference duration when a terminal accesses a channel by means of Type1 channel access. The first reference duration includes the first transmission and/or a second transmission. The first transmission or the second transmission includes at least one of the following: a sidelink SL transmission based on a blind retransmission mechanism; a channel state information CSI request transmission or an inter-user equipment coordination request transmission; a physical sidelink feedback channel PSFCH transmission or a sidelink synchronization signal block S-SSB transmission; a NACK-only groupcast transmission; an ACK/NACK based groupcast transmission; and a physical sidelink shared channel PSSCH unicast transmission.

According to a fifth aspect, a readable storage medium is provided. The readable storage medium stores a program or an instruction. The program or the instruction, when executed by a processor, implements the steps of the contention window adjustment method described in the first aspect.

According to a sixth aspect, a chip is provided. The chip includes a processor and a communication interface. The communication interface is coupled to the processor. The processor is configured to execute a program or an instruction to implement the contention window adjustment method described in the first aspect.

According to a seventh aspect, a computer program/program product is provided. The computer program/program product is stored in a storage medium. The computer program/program product is executed by at least one processor, to implement the steps of the contention window adjustment method described in the first aspect.

In embodiments of this application, when the terminal accesses the channel by means of the Type1 channel access, a new reference duration reference duration is defined for some transmissions such as the blind retransmission, the unicast transmission, and the groupcast transmission for the SL in the unlicensed band that have no feedback or special feedback. The CWS is adjusted based on the first transmission or the feedback of the transmission within the first reference duration, so that an SL UE may reasonably adjust the CWS when the channel in the unlicensed band is accessed, to avoid a transmission conflict and improve transmission efficiency.

### BRIEF DESCRIPTION OF THE DRAWINGS

FIG. 1 is a block diagram of a wireless communication system to which an embodiment of this application may be applied;
FIG. 2 is a schematic flowchart of a contention window adjustment method according to an embodiment of this application;
FIG. 3 is a schematic diagram I of a transmission according to an embodiment of this application;
FIG. 4 is a schematic diagram II of a transmission according to an embodiment of this application;
FIG. 5 is a schematic diagram **III** of a transmission according to an embodiment of this application;
FIG. 6 is a schematic diagram IV of a transmission according to an embodiment of this application;
FIG. 7 is a schematic diagram V of a transmission according to an embodiment of this application;
FIG. 8 is a schematic diagram VI of a transmission according to an embodiment of this application;
FIG. 9 is a schematic structural diagram of a contention window adjustment apparatus according to an embodiment of this application;
FIG. 10 is a schematic structural diagram of a communication device according to an embodiment of this application; and
FIG. 11 is a schematic diagram of a hardware structure of a terminal for implementing an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used for distinguishing between similar objects, rather than describing a specific sequence or order. It should be understood that the terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of the connected objects, and the character "/" generally indicates an "or" relationship between the associated objects.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" in embodiments of this application are usually interchangeably used, and the described technologies may be used for both the system and the radio technologies mentioned above, as well as for another system and radio technology. A new radio (New Radio, NR) system is described below as an example, and the term NR is used in most of the following description. Nevertheless, the technologies may also be applied to applications other than applications of the NR system, such as a 6^{th} Generation (6^{th} Generation, 6G) communication system.

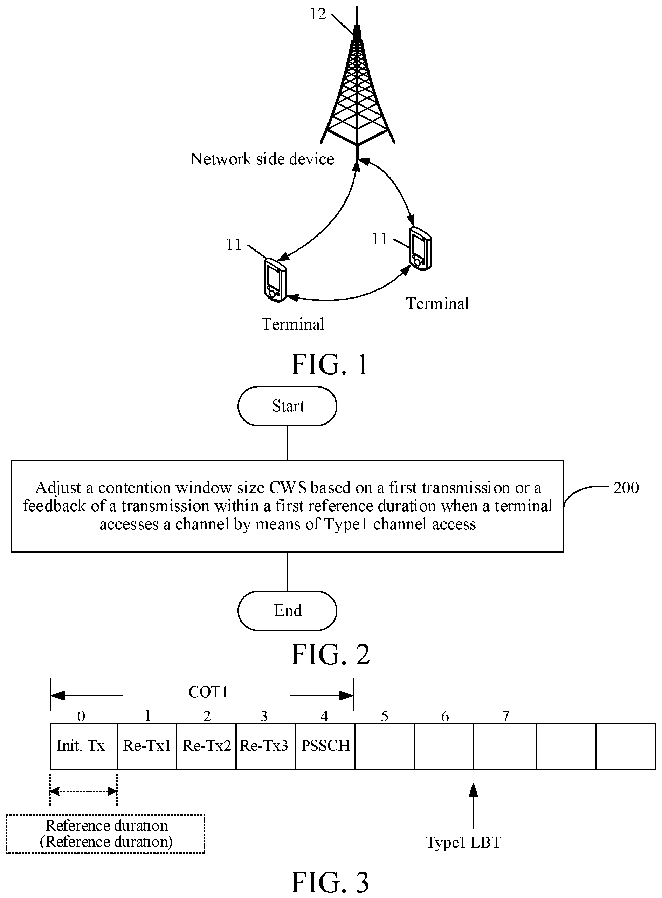

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (ultra-Mobile personal computer, UMPC), a mobile internet device (Mobile Internet Device, MID), an augmented reality (augmented reality, AR)/virtual reality (virtual reality, VR) device, a robot, a wearable device (Wearable Device), an on-board device (VUE), a pedestrian user equipment (PUE), smart home (a home device with a wireless communication function, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle, a smart ankle chain, and the like), a smart wristband, smart clothing, and the like. It should be noted that a specific type of the terminal 11 is not limited in embodiments of this application. The network side device 12 may include an access network device or a core network device. The access network device 12 may also be referred to as a wireless access network device, a radio access network (Radio Access Network, RAN), a wireless access network function, or a wireless access network unit. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a household NodeB, a household evolved NodeB, a transmitting receiving point (Transmitting Receiving Point, TRP), or some other appropriate term in the field, as long as the same technical effect is achieved. The base station is not limited to a specific technical term. It should be noted that, in embodiments of this application, only a base station in the NR system is used as an example, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, but the specific type of the core network device is not limited.

First, relevant content involved in this application is described below.

### I. Unlicensed band

When a transmission node needs to send information and needs to perform LBT first, the transmission node performs power detection (energy detection, ED) on a surrounding node. When a detected power is lower than a threshold, a channel is considered as idle (idle), and the transmission node may send the information. Otherwise, the channel is considered as busy and the transmission node cannot send the information. The transmission node may be a base station, a UE, a Wi-Fi AP, and the like. After the transmission node starts transmission, a channel occupancy time COT cannot exceed the MCOT. In addition, according to an occupied channel bandwidth (occupied channel bandwidth, OCB) rule, in an unlicensed band, the transmission node needs to occupy at least 70% (60 GHz) or 80% (5 GHz) of a bandwidth of the whole band during each transmission.

Types of the LBT commonly used in an NR-based unlicensed band access technology (NR Unlicensed, NRU) may be divided into Type1, Type2A, Type2B, and Type2C. The Type1 LBT is a channel listening mechanism based on back-off (back-off). When the transmission node detects that the channel is busy, the back-off is performed and the listening is continued until that the channel is idle is heard. The Type2C means that a sending node does not perform the LBT, that is, no LBT or immediate transmission. The Type2A LBT and the Type2B LBT are one-shot LBT. In other words, the node performs LBT once before transmission. The transmission is performed if the channel is idle, and the transmission is not performed if the channel is busy. A difference is that the Type2A performs LBT within 25 µs, which is applicable to a case that a gap between two transmissions is greater than or equal to 25 µs when the COT is shared. However, the Type2B performs the LBT within 16 µs, which is applicable to a case that a gap between two transmissions is equal to 16 µs when the COT is shared. In addition, the Type2 LBT is applicable to LAA/eLAA/FeLAA. The gap between the two transmissions is greater than or equal to 25 µs when the COT is shared. The eNB and the UE may use the Type 2 LBT. In addition, in a frequency range 2-2, types of the LBT are Type1, Type2, and Type3. The Type1 is the channel listening mechanism based on back-off. The Type2 is one-shot LBT, and LBT for 5 µs is performed within 8 µs. The Type 3 does not perform the LBT.

A downlink DL/uplink UL transmission burst (transmission burst) is a set of transmissions sent by the base station or the UE with a gap of no more than 16 µs. For a transmission in a DL/UL transmission burst, the base station or the UE may directly perform transmission without performing the LBT after the gap. When the gap between transmissions is greater than 16 µs, the transmission burst may be regarded as a separate DL/UL transmission burst.

### II. CWS adjustment

When a UE accesses a channel by means of Type1 channel access (Type1 channel access), the UE may adjust a size of a CWS based on a hybrid automatic repeat request (Hybrid automatic repeat request, HARQ)/acknowledgment (acknowledgment, ACK) of data transmitted within a reference duration. If a new HARQ feedback exists, the CWS is adjusted by using a feedback of a latest COT. If the HARQ feedback is an ACK, the CW is set to CWmin. If the HARQ feedback is a negative-acknowledgment (Negative-ACKnowledgment, NACK)), the CW is set to min (CW×2 + 1, CWmax). Otherwise, the CW remains unchanged.

The reference duration is a channel occupancy time from a starting position of the COT to a first slot including at least one physical uplink shared channel (Physical Uplink Shared Channel, PUSCH) that completes transmission on all allocated resources. Alternatively, the reference duration is a channel occupancy time from a starting position of the COT to the first transmission burst including the PUSCH that completes transmission on all allocated resources.

### III. SL

A sidelink (sidelink, SL, or translated as secondary link, side link, edge link, and the like) transmission is a data transmission directly performed between terminals (User Equipment, UE) on a physical layer. The LTE sidelink performs communication based on broadcast, and may be used for supporting basic security communication of vehicle to everything (vehicle to everything, V2X), but not applicable to another more advanced V2X service. A 5G NR system supports more advanced sidelink transmission designs, for example, unicast, multicast, or groupcast, so as to support more comprehensive service types.

An automatic gain control (Automatic gain control, AGC) symbol is required before each SL transmission, and a gap symbol is required after each transmission. The AGC symbol is typically a retransmission of a next symbol, for example, a physical sidelink control channel (Physical Sidelink Control Channel, PSCCH)/physical sidelink shared channel (Physical Sidelink Shared Channel, PSSCH), or a physical sidelink feedback channel (Physical Sidelink Feedback Channel, PSFCH). The SL UE can only start the transmission of the PSCCH/PSSCH or the PSFCH at a fixed position within a slot.

A contention window adjustment method and a terminal provided in embodiments of this application are described in detail below through some embodiments and application scenarios thereof with reference to the accompanying drawings.

FIG. 2 is a schematic flowchart of a contention window adjustment method according to an embodiment of this application. As shown in FIG. 2, the contention window adjustment method provided in this embodiment of this application includes the following step.

Step 200: Adjust a contention window size CWS based on a first transmission or a feedback of a transmission within a first reference duration when a terminal accesses a channel by means of Type1 channel access.

The first reference duration includes the first transmission and/or a second transmission.

The first transmission or the second transmission includes at least one of the following:
a sidelink SL transmission based on a blind retransmission mechanism;
a channel state information (Channel State Information, CSI) request transmission or an inter-user equipment coordination request (Inter-UE coordination request) transmission;
a physical sidelink feedback channel (Physical Sidelink Feedback Channel, PSFCH) or a sidelink synchronization signal block (Sidelink Synchronization Signal and PBCH block, S-SSB) transmission;
a negative-acknowledgment NACK-only groupcast (groupcast) transmission;
an acknowledgment/negative-acknowledgment ACK/NACK based groupcast transmission; and
a unicast (unicast) physical sidelink shared channel (Physical Sidelink Shared Channel, PSSCH) transmission.

It may be understood that this application provides a method for adjusting a CWS for some transmissions without feedback or with special feedback such as blind retransmission of the SL and groupcast (groupcast) transmission in an unlicensed band and for the PSSCH unicast transmission in the unlicensed band, so that an SL terminal may reasonably adjust the CWS when the unlicensed band channel is accessed, to avoid a transmission conflict and improve transmission efficiency.

It may be understood that the groupcast transmission in this application is a groupcast PSSCH transmission, that is, a NACK-only groupcast PSSCH transmission and an ACK/NACK based groupcast PSSCH transmission.

Optionally, in a case that the first transmission is the sidelink SL transmission based on the blind retransmission mechanism, the CWS is adjusted based on the first transmission or the feedback of the transmission within the first reference duration.

Optionally, in a case that the first transmission is a channel state information CSI request or the inter-user equipment coordination request transmission, the CWS is adjusted based on the first transmission.

Optionally, in a case that the first transmission is the physical sidelink feedback channel PSFCH transmission or the sidelink synchronization signal block S-SSB transmission, the CWS is adjusted based on the first transmission.

Optionally, in a case that the first transmission is the NACK-only groupcast transmission, the CWS is adjusted based on the first transmission or the feedback of the transmission within the first reference duration.

Optionally, in a case that the first transmission is the ACK/NACK based groupcast transmission, the CWS is adjusted based on the feedback of the transmission within the first reference duration.

Optionally, in a case that the first transmission is the unicast PSSCH transmission, the CWS is adjusted based on the feedback of the transmission within the first reference duration.

Optionally, the adjusting the CWS based on the feedback of the transmission within the first reference duration includes: adjusting the CWS based on the feedback of the second transmission. The second transmission follows the first transmission, and a type of the first transmission is different from a type of the second transmission.

Optionally, the first reference duration includes at least one of the following:
from a starting position of a first COT to a first position;
from the starting position of the first COT to a second position;
from the starting position of the first COT to an earliest ending position among the first position and the second position;
a duration of a first transmission burst including the first transmission or the second transmission within the first COT; and
the first COT.

The first position is an end position of a first slot in which at least one of the first transmission or the second transmission completes transmission on all allocated resources, and the second position is an end position of the first transmission burst including the first transmission or the second transmission that completes transmission on all of the allocated resources.

The first COT is a COT before the channel is accessed by means of Type1 channel access. In other words, the first COT may be understood as a historical COT. Further, based on a definition of the first reference duration, it may be determined that the first transmission and the second transmission are within the first COT.

In some optional embodiments, the second transmission follows the first transmission, and a type of the first transmission is different from a type of the second transmission. For example, the sidelink SL transmission based on the blind retransmission mechanism, the channel state information request transmission or the inter-user equipment coordination request transmission, the physical sidelink feedback channel transmission or the sidelink synchronization signal block transmission, the NACK-only groupcast transmission, the ACK/NACK based groupcast transmission, and the unicast physical sidelink shared channel transmission each correspond to a transmission type.

In some optional embodiments, the first transmission starts from the starting position of the first COT.

Optionally, in a case that the first transmission is the sidelink SL transmission based on the blind retransmission mechanism, the adjusting a contention window size CWS based on a first transmission or a feedback of a transmission within a first reference duration includes at least one of the following:
a) Maintain the CWS as it is.

In an implementation, the reference duration is not defined for the COT with the starting position including the SL transmission based on the blind retransmission mechanism. In other words, the CWS is maintained as it is.

In an implementation, the reference duration including the SL transmission based on the blind retransmission mechanism is used as an invalid reference duration, and the CWS is not adjusted based on the feedback of the reference duration.

b) Use each retransmission as the NACK, and use an end of all retransmissions as the ACK, and successively adjust the CWS based on adjustment rules respectively corresponding to the ACK and the NACK.

Optionally, the successively adjusting the CWS based on adjustment rules respectively corresponding to an ACK and a NACK includes at least one of the following:
adjusting the CWS to min (CW×2 + 1, CWmax) for each retransmission; and
adjusting the CWS to CWmin after all of the retransmissions come to an end.

CW is a value before contention window adjustment, CWmin is a minimum value of a contention window, and CWmax is a maximum value of the contention window.

If an HARQ-ACK feedback is received after a last update of the CWS, and at least one ACK exists in an HARQ-ACK corresponding to a PSSCH within a reference duration of a latest COT, the CWS is adjusted to CWmin. Otherwise, the CWS is adjusted to min (CW×2 + 1, CWmax).

It should be noted that for an N^{th} retransmission, the CWS is adjusted based on the CWS in an (N-1)^{th} retransmission.

c) Adjust the CWS based on the feedback of the transmission within the first reference duration in a case that the second transmission includes the ACK/NACK based groupcast transmission or the physical sidelink shared channel PSSCH unicast transmission.

It may be understood that when the first transmission is the SL transmission based on the blind retransmission mechanism, the reference duration is defined as a duration including the first transmission and the second transmission or a duration including the second transmission.

The reference duration is defined from the starting position of the first COT to an end position of a first SL transmission or transmission burst based on the HARQ retransmission mechanism that completes transmission on all allocated resources. In other words, the first reference duration includes the first transmission and the second transmission; or
the reference duration is defined as a length of the first SL transmission or SL transmission burst based on the HARQ retransmission mechanism that completes the transmission on all allocated resources. In other words, the first reference duration includes the second transmission.

The above reference duration is defined, so that at least one SL transmission based on the HARQ retransmission mechanism is included within the defined reference duration.

The SL transmission based on the HARQ retransmission mechanism may be a unicast transmission and/or a groupcast transmission.

Optionally, the unicast transmission is the unicast PSSCH transmission.

Optionally, the groupcast transmission is the ACK/NACK based groupcast transmission.

It may be understood that, in a case that the second transmission is included within the first reference duration and the second transmission is the ACK/NACK based groupcast transmission or the unicast PSSCH transmission, the CWS is adjusted based on the feedback of the transmission within the first reference duration.

In a case that the second transmission is the ACK/NACK based groupcast transmission, the adjusting the CWS based on the feedback of the transmission within the first reference duration includes at least one of the following:
adjusting the CWS based on the received ACK and/or NACK; and
adjusting the CWS based on all ACK and/or NACK feedbacks of a transport block TB.

Optionally, the adjusting the CWS based on a received ACK and/or NACK includes at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2.

X, Y, Z1, and Z2 are all numbers greater than or equal to 0 and less than or equal to 1, or X, Y, Z1, and Z2 are all integers greater than or equal to 0, where CW is a value before contention window adjustment, CWmin is a minimum value of a contention window, and CWmax is a maximum value of the contention window.

Optionally, the adjusting the CWS based on all ACK and/or NACK feedbacks of a transport block TB includes at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals.

CW is a value before contention window adjustment, CWmin is a minimum value of a contention window, and CWmax is a maximum value of the contention window.

In a case that the second transmission is the unicast PSSCH transmission, the adjusting the CWS based on the feedback of the transmission within the first reference duration includes at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not include a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal includes the retransmission and the transmission of the terminal is not within the time Tw after the reference duration of the earliest COT after the last update of the CWS.

Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window. The transmission of the terminal is the unicast PSSCH transmission.

The last update of the CWS refers to a last adjustment to the CWS before a current Type1 channel access.

The CWS adjustment method when the first transmission is the sidelink SL transmission based on the blind retransmission mechanism is described below through specific examples.

FIG. 3 is a schematic diagram I of a transmission according to an embodiment of this application. As shown in FIG. 3, a Tx UE performs a blind retransmission within a COT1, including one initial transmission and three retransmissions, and then performs a PSSCH transmission based on an HARQ feedback retransmission. When the Tx UE performs Type1 LBT in a slot7 to obtain a new COT, the Tx UE needs to adjust a CWS based on a feedback of a transmission within the COT1. A reference duration may be determined according to the prior art, for example, slot0. Because a blind retransmission mechanism has no HARQ feedback, no feedback for an SL transmission within the reference duration exists. The reference duration may be used as an invalid reference duration. Alternatively, in this case, the reference duration is not defined. In other words, when the SL transmission based on the blind retransmission is included within a previous COT, the CWS remains unchanged.

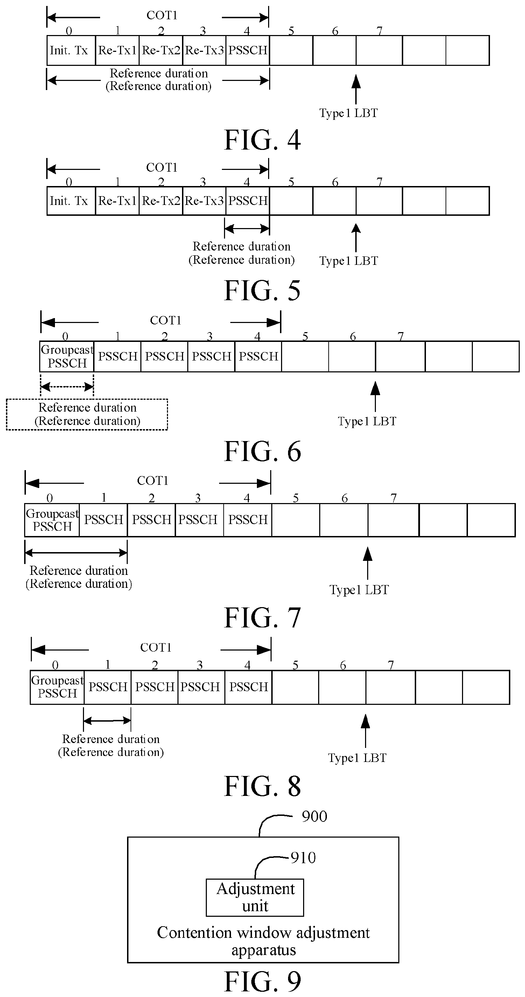

In addition, a new reference duration may be defined for the above case, so that at least one PSSCH transmission based on the HARQ feedback retransmission is included within the reference duration. As shown in FIG. 4 and FIG. 5, FIG. 4 is a schematic diagram II of a transmission according to an embodiment of this application. FIG. 5 is a schematic diagram III of a transmission according to an embodiment of this application.

In FIG. 4, a reference duration still starts from a starting position of a COT1 and ends at an end position that is an end position of the PSSCH transmission, that is, an end position of a slot4.

In FIG. 5, SL transmissions based on the blind retransmission are all excluded from the reference duration, and the starting position of the reference duration is a starting position of a PSSCH transmission based on an HARQ feedback retransmission, that is, a starting position of the slot4. The PSSCH transmission based on the HARQ feedback retransmission may be a unicast transmission. When the PSSCH transmission based on the HARQ feedback retransmission is a groupcast transmission, reference is made to a CWS adjustment implementation corresponding to a NACK-only groupcast transmission and a CWS adjustment implementation corresponding to a subsequent ACK/NACK based groupcast transmission in this application.

In addition, a CWS may be successively adjusted based on all of the SL transmissions based on the blind retransmission within the COT1. For an initial transmission, the CWS remains unchanged. For a first retransmission, the CWS is adjusted to min (CW×2 + 1, CWmax). For a second retransmission, the CWS continues to be adjusted to min (CW×2 + 1, CWmax) based on a previous size, and so on. The CWS is adjusted to CWmin after all of the retransmissions come to an end. In other words, the Tx UE may adjust the CWS to CWmin at a slot7 if all blind retransmissions may be completed within the COT1. If all blind retransmissions cannot be completed within the COT1, the Tx UE adjusts the CWS based on a number of blind retransmissions at the slot7.

It should be noted that the above transmission based on a blind retransmission mechanism includes the initial transmission and a retransmission. The blind retransmission of the SL transmission refers to transmission in a resource pool not configured with a PSFCH in a case that a higher layer (MAC layer) designates an HARQ feedback of TB transmission as disable, or means that SCI (sidelink control information (Sidelink control information, SCI)) based on which PSSCH transmission is scheduled indicates that no HARQ feedback is to be provided.

In embodiments of this application, a method for adjusting a CWS based on the first transmission or a feedback of a transmission within a first reference duration in a case that the first transmission is the sidelink SL transmission based on the blind retransmission mechanism when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, in a case that the first transmission is the channel state information CSI request transmission or the inter-user equipment coordination request transmission, the adjusting a contention window size CWS based on the first transmission includes at least one of the following:
defaulting to an ACK, and adjusting the CWS to CWmin if a corresponding channel state information report CSI report or inter-user equipment coordination information Inter-UE coordination information is received;
maintaining the CWS as it is if a CSI report or Inter-UE coordination information has not been received within a CSI feedback window; and
adjusting the CWS to min (CW×2 + 1, CWmax) if the CSI report has not been received after a CSI feedback delay is elapsed or after the CSI feedback window times out.

CW is a value before contention window adjustment, CWmin is a minimum value of a contention window, and CWmax is a maximum value of the contention window.

It may be understood that the first reference duration includes the first transmission in this case, but does not need to refer to the feedback of the first transmission. The CWS is adjusted depending on whether corresponding response information, that is, a CSI report or Inter-UE coordination information, is received after the first transmission is sent.

Optionally, in a case that the first transmission is the physical sidelink feedback channel PSFCH transmission or the sidelink synchronization signal block S-SSB transmission, the adjusting the contention window size CWS based on the first transmission includes at least one of the following:
maintaining the CWS as it is or keeping the CWS always at CWmin, where CWmin is a minimum value of a contention window.

It may be understood that the first reference duration includes the first transmission in this case, and the CWS is adjusted directly based on a type of the first transmission, that is, a PSFCH or an S-SSB.

Optionally, in a case that the first transmission is the NACK-only groupcast transmission, the adjusting a contention window size CWS based on a first transmission or a feedback of a transmission within a first reference duration includes at least one of the following:
a) Maintain the CWS as it is.

When the first transmission is the NACK-only groupcast transmission, no reference duration is defined or the reference duration including the NACK-only groupcast transmission is used as an invalid reference duration. In other words, the CWS remains unchanged.

b) Adjust the CWS based on a received NACK feedback.

In other words, a terminal adjusts the CWS based on a NACK of data of a transmission within the reference duration.

Optionally, the adjusting the CWS based on a received NACK feedback includes at least one of the following:
adjusting the CWS to min (CW×2 + 1, CWmax) when the NACK is received; and
maintaining the CWS as it is when no feedback of the NACK-only groupcast transmission is received.

CW is a value before contention window adjustment, CWmin is a minimum value of a contention window, and CWmax is a maximum value of the contention window.

It may be understood that the first reference duration includes the first transmission in this case.

c) Adjust the contention window size CWS based on the feedback of the transmission within the first reference duration in a case that a second transmission includes the ACK/NACK based groupcast transmission and/or the physical sidelink shared channel PSSCH unicast transmission.

When the first transmission is the NACK-only groupcast transmission, the reference duration is defined as:
from a starting position of a COT to an end position of a first unicast SL transmission (burst) that completes transmission on all allocated resources that is, the first reference duration includes the first transmission and the second transmission; or
from the starting position of the COT to an end position of a first ACK/NACK based groupcast SL transmission (burst) that is successfully transmitted on all allocated resources, that is, the first reference duration includes the first transmission and the second transmission; or
a length of the first unicast SL transmission (burst) that completes the transmission on all allocated resources, that is, the first reference duration includes the second transmission.

The above reference duration is defined, so that at least one unicast SL transmission or the ACK/NACK based groupcast SL transmission is included within the defined reference duration.

In a case that the second transmission includes the ACK/NACK based groupcast transmission, the adjusting a contention window size CWS based on a feedback of a transmission within a first reference duration includes at least one of the following:
adjusting the CWS based on the received ACK and/or NACK; and
adjusting the CWS based on all ACK and/or NACK feedbacks of a transport block TB.

Optionally, the adjusting the CWS based on a received ACK and/or NACK includes at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2.

X, Y, Z1, and Z2 are all numbers greater than or equal to 0 and less than or equal to 1, or X, Y, Z1, and Z2 are all integers greater than or equal to 0, where CW is a value before contention window adjustment, CWmin is a minimum value of a contention window, and CWmax is a maximum value of the contention window.

Optionally, the adjusting the CWS based on all ACK and/or NACK feedbacks of a transport block TB includes at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals.

CW is a value before contention window adjustment, CWmin is a minimum value of a contention window, and CWmax is a maximum value of the contention window.

In a case that the second transmission includes the unicast PSSCH transmission, the adjusting the contention window size CWS based on the feedback of the transmission within the first reference duration includes at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not include a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal includes the retransmission and the transmission of the terminal is not within the time Tw after the reference duration of the earliest COT after the last update of the CWS.

Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window.

The last update of the CWS refers to a last adjustment to the CWS before a current Type1 channel access.

d) Adjust the CWS based on the received ACK and/or NACK, where the ACK is transmitted through a PSFCH resource different from the NACK.

In this implementation, transmission resources are respectively configured for the ACK feedback and the NACK feedback. In other words, the ACK is transmitted through a PSFCH resource different from the NACK. For example, all Rx UEs feed back the ACK on one PSFCH resource, all Rx UEs feed back the NACK on another PSFCH resource, and the terminal adjusts the CWS based on the received ACK and/or NACK.

Optionally, the adjusting the CWS based on a received ACK and/or NACK includes at least one of the following:
adjusting the CWS to CWmin in a case that the ACK is received and the NACK has not been received;
adjusting the CWS to min (CW×2 + 1, CWmax) in a case that the NACK is received and the ACK has not been received;
maintaining the CWS as it is or adjusting the CWS to min (CW×2 + 1, CWmax) in a case that both the ACK and the NACK are received; and
maintaining the CWS as it is in a case that the terminal has not received any feedback.

CW is a value before contention window adjustment, CWmin is a minimum value of a contention window, and CWmax is a maximum value of the contention window.

The CWS adjustment method when the first transmission is the NACK-only groupcast transmission is described below through specific examples.

FIG. 6 is a schematic diagram IV of a transmission according to an embodiment of this application. As shown in FIG. 6, a Tx UE sends a NACK-only groupcast PSSCH transmission and a unicast PSSCH transmission in a COT1. The UE needs to adjust a CWS based on a feedback of a PSSCH transmission transmitted in a reference duration when performing Type1 LBT in a slot7 to re-obtain a channel. In an implementation, the reference duration including only the NACK-only groupcast PSSCH is used as an invalid reference duration, or the reference duration is not defined for this case and the CWS is maintained as it is.

In another implementation, a new reference duration may also be defined, as shown in FIG. 7 and FIG. 8. FIG. 7 is a schematic diagram V of a transmission according to an embodiment of this application. FIG. 8 is a schematic diagram VI of a transmission according to an embodiment of this application. At least one unicast PSSCH transmission is included within a new reference duration. A starting position of the reference duration may be a starting position of a COT1, or may be a starting position of a first unicast PSSCH that completes transmission on all allocated resources. An end position of the reference duration is an end position of the first unicast PSSCH that completes the transmission on all allocated resources.

In embodiments of this application, a method for adjusting a CWS based on a first transmission or a feedback of a transmission within a first reference duration in a case that the first transmission is a NACK-only groupcast transmission when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, in a case that the first transmission or the second transmission is the ACK/NACK based groupcast transmission, the adjusting a contention window size CWS based on a feedback of a transmission within a first reference duration includes at least one of the following:
a) Adjust the CWS based on a received ACK and/or NACK.

Optionally, the adjusting the CWS based on a received ACK and/or NACK includes at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2.

X, Y, Z1, and Z2 are all numbers greater than or equal to 0 and less than or equal to 1, or X, Y, Z1, and Z2 are all integers greater than or equal to 0, where CW is a value before contention window adjustment, CWmin is a minimum value of a contention window, and CWmax is a maximum value of the contention window.

For example, when the Tx UE accesses the channel by means of the Type1 channel access, and the reference duration within the previous COT includes the ACK/NACK based groupcast transmission, a different Rx UE uses a different PSFCH to perform HARQ feedback, and the Tx UE receives a plurality of HARQ feedbacks. The Tx UE may perform CWS adjustment based on a proportion of the received HARQ feedback. When the received ACK exceeds X, the CWS is adjusted to CWmin. When the received NACK exceeds Y, the CWS is adjusted to min (CW×2 + 1, CWmax). When the received ACK or NACK is in a range of Z1 to Z2, the CWS remains unchanged. X, Y, Z1, and Z2 are greater than or equal to 0 and less than or equal to 1, and X, Y, and Z1 or Z2 may have a same value, that is, X = Y = Z1/Z2. In addition, X, Y, and Z1 or Z2 for reference of the adjustment may alternatively be a quantity of received ACKs or NACKs. In other words, values of X, Y, and Z1 or Z2 are integers greater than or equal to 0.

b) Adjust the CWS based on all ACK and/or NACK feedbacks of a transport block TB.

Optionally, the adjusting the CWS based on all ACK and/or NACK feedbacks of a transport block TB includes at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals.

CW is a value before contention window adjustment, CWmin is a minimum value of a contention window, and CWmax is a maximum value of the contention window.

In embodiments of this application, a method for adjusting a CWS based on a feedback of a transmission within a first reference duration in a case that the first transmission or the second transmission is the ACK/NACK based groupcast transmission when the terminal accesses a channel by means of Type1 channel access is provided, so that an SL UE may reasonably adjust the CWS when an unlicensed band channel is accessed, thereby avoiding a transmission conflict and improving transmission efficiency.

In some optional embodiments, in a case that the first transmission or the second transmission is the physical sidelink shared channel PSSCH unicast transmission, the adjusting a contention window size CWS based on a feedback of a transmission within a first reference duration includes at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not include a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal includes the retransmission and the transmission of the terminal is not within the time Tw after the reference duration of the earliest COT after the last update of the CWS.

Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window. The last update of the CWS refers to a last adjustment to the CWS before a current Type1 channel access. It may be understood that in a case that the first transmission or the second transmission is the physical sidelink shared channel PSSCH unicast transmission, the reference duration is defined as:
a) from a starting position of a first COT to an end position of a first slot in which at least one PSSCH completes transmission on all allocated resources; or
b) from the starting position of the first COT to an end position of a first transmission burst (transmission burst) including the PSSCH that completes the transmission on all allocated resources; or
c) from the starting position of the first COT to an earliest ending position in a) and b); or
d) if the first COT includes the PSSCH but does not include any PSSCH that completes the transmission on all allocated resources, the reference duration is defined as the duration of the first transmission burst in which the UE includes the PSSCH within the first COT.

When the terminal accesses the channel by means of the Type1 channel access, if the HARQ-ACK feedback is received after the last update of the CWS:
a) At least one ACK exists in the HARQ-ACK corresponding to the PSSCH within the reference duration of a latest COT, and the CWS is adjusted to CWmin.
b) Otherwise, the CWS is adjusted to min (CW×2 + 1, CWmax).

When the terminal accesses the channel by means of the Type1 channel access, if the HARQ-ACK feedback has not been received after the last update of the CWS:
a) In a case that the transmission of the terminal does not include a retransmission or the transmission of the terminal is within a time Tw after the reference duration of an earliest (earliest) COT after the last update of the CWS, the CWS is maintained as it is.
   Tw = max (X ms, a length of a transmission burst starting from the reference duration of the earliest COT + 1 ms), and X = 5 or 10. If the regulation cannot ensure that no other technology exists, X = 5, otherwise X = 10.
b) Otherwise, the CWS is adjusted to min (CW×2 + 1, CWmax).

In embodiments of this application, a method for adjusting a CWS based on a feedback of a transmission within a first reference duration in a case that the first transmission or the second transmission is the unicast PSSCH transmission when the terminal accesses a channel by means of Type1 channel access is provided, so that an SL UE may reasonably adjust the CWS when an unlicensed band channel is accessed, thereby avoiding a transmission conflict and improving transmission efficiency.

It should be noted that in the above embodiments, the values of the CW, CWmin, and CWmax are all related to a channel access priority class CAPC. In other words, the CW may be CWp, indicating a value of the CWS when CAPC = p. For CWmin, p represents a minimum value of the CWS when CAPC = p, and for CWmax, p represents a maximum value of the CWS when CAPC = p.

The contention window adjustment method provided in embodiments of this application may be performed by a contention window adjustment apparatus. In embodiments of this application, the contention window adjustment apparatus provided in embodiments of this application is described by using an example in which the contention window adjustment apparatus performs the contention window adjustment method.

FIG. 9 is a schematic structural diagram of a contention window adjustment apparatus according to an embodiment of this application. As shown in FIG. 9, the contention window adjustment apparatus 900 includes:
an adjustment unit 910, configured to adjust a contention window size CWS based on a first transmission or a feedback of a transmission within a first reference duration when a terminal accesses a channel by means of Type1 channel access.

The first reference duration includes the first transmission and/or a second transmission.

The first transmission or the second transmission includes at least one of the following:
a sidelink SL transmission based on a blind retransmission mechanism;
a channel state information CSI request transmission or an inter-user equipment coordination request transmission;
a physical sidelink feedback channel PSFCH transmission or a sidelink synchronization signal block S-SSB transmission;
a negative-acknowledgment NACK-only groupcast transmission;
an acknowledgment/negative-acknowledgment ACK/NACK based groupcast transmission; and
a physical sidelink shared channel PSSCH unicast transmission.

In embodiments of this application, when the terminal accesses the channel by means of the Type1 channel access, a new reference duration reference duration is defined for some transmissions such as the blind retransmission, the unicast transmission, and the groupcast transmission for the SL in the unlicensed band that have no feedback or special feedback. The CWS is adjusted based on the first transmission or the feedback of the transmission within the first reference duration, so that an SL UE may reasonably adjust the CWS when the channel in the unlicensed band is accessed, to avoid a transmission conflict and improve transmission efficiency.

Optionally, the first reference duration includes at least one of the following:
from a starting position of a first channel occupancy time COT to a first position;
from the starting position of the first COT to a second position;
from the starting position of the first COT to an earliest ending position among the first position and the second position;
a duration of a first transmission burst including the first transmission or the second transmission within the first COT; and
the first COT.

The first position is an end position of a first slot in which at least one of the first transmission or the second transmission completes transmission on all allocated resources, and the second position is an end position of the first transmission burst including the first transmission or the second transmission that completes transmission on all of the allocated resources.

The first COT is a COT before the channel is accessed by means of Type1 channel access.

Optionally, the second transmission follows the first transmission, and a type of the first transmission is different from a type of the second transmission.

Optionally, in a case that the first transmission is the sidelink SL transmission based on the blind retransmission mechanism, the adjusting a contention window size CWS based on a first transmission or a feedback of a transmission within a first reference duration includes at least one of the following:
maintaining the CWS as it is;
successively adjusting the CWS based on adjustment rules respectively corresponding to an ACK and a NACK, where each retransmission is regarded as a NACK, and an end of all retransmissions is regarded as an ACK; and
adjusting the CWS based on the feedback of the transmission within the first reference duration in a case that the second transmission includes the ACK/NACK based groupcast transmission or the physical sidelink shared channel PSSCH unicast transmission.

In embodiments of this application, a method for adjusting a CWS based on the first transmission or a feedback of a transmission within a first reference duration in a case that the first transmission is the sidelink SL transmission based on the blind retransmission mechanism when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, in a case that the first transmission is the channel state information CSI request transmission or the inter-user equipment coordination request transmission, the adjusting a contention window size CWS based on the first transmission includes at least one of the following:
adjusting the CWS to CWmin if a corresponding channel state information report CSI report or inter-user equipment coordination information Inter-UE coordination information is received;
maintaining the CWS as it is if a CSI report or Inter-UE coordination information has not been received within a CSI feedback window; and
adjusting the CWS to min (CW×2 + 1, CWmax) if the CSI report has not been received after a CSI feedback delay is elapsed or after the CSI feedback window times out.

CW is a value before contention window adjustment, CWmin is a minimum value of a contention window, and CWmax is a maximum value of the contention window.

Optionally, in a case that the first transmission is the physical sidelink feedback channel PSFCH transmission or the sidelink synchronization signal block S-SSB transmission, the adjusting the contention window size CWS based on the first transmission includes at least one of the following:
maintaining the CWS as it is or keeping the CWS always at CWmin, where CWmin is a minimum value of a contention window.

Optionally, in a case that the first transmission is the NACK-only groupcast transmission, the adjusting a contention window size CWS based on a first transmission or a feedback of a transmission within a first reference duration includes at least one of the following:
maintaining the CWS as it is;
adjusting the CWS based on a received NACK feedback;
adjusting the CWS based on the feedback of the transmission within the first reference duration in a case that the second transmission includes the ACK/NACK based groupcast transmission and/or the physical sidelink shared channel PSSCH unicast transmission; and
adjusting the CWS based on the received ACK and/or NACK, where the ACK is transmitted through a PSFCH resource different from the NACK.

In embodiments of this application, a method for adjusting a CWS based on a first transmission or a feedback of a transmission within a first reference duration in a case that the first transmission is a NACK-only groupcast transmission when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, in a case that the first transmission or the second transmission is the ACK/NACK based groupcast transmission, the adjusting a contention window size CWS based on a feedback of a transmission within a first reference duration includes at least one of the following:
adjusting the CWS based on the received ACK and/or NACK; and
adjusting the CWS based on all ACK and/or NACK feedbacks of a transport block TB.

In embodiments of this application, a method for adjusting a CWS based on a feedback of a transmission within a first reference duration in a case that the first transmission or the second transmission is the ACK/NACK based groupcast transmission when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, the successively adjusting the CWS based on adjustment rules respectively corresponding to an ACK and a NACK includes at least one of the following:
adjusting the CWS to min (CW×2 + 1, CWmax) for each retransmission; and
adjusting the CWS to CWmin after all of the retransmissions come to an end.

CW is a value before contention window adjustment, CWmin is a minimum value of a contention window, and CWmax is a maximum value of the contention window.

Optionally, the adjusting the CWS based on a received NACK feedback includes at least one of the following:
adjusting the CWS to min (CW×2 + 1, CWmax) when the NACK is received; and
maintaining the CWS as it is when no feedback of the NACK-only groupcast transmission is received.

CW is a value before contention window adjustment, CWmin is a minimum value of a contention window, and CWmax is a maximum value of the contention window.

Optionally, the adjusting the CWS based on a received ACK and/or NACK includes at least one of the following:
adjusting the CWS to CWmin in a case that the ACK is received and the NACK has not been received;
adjusting the CWS to min (CW×2 + 1, CWmax) in a case that the NACK is received and the ACK has not been received;
maintaining the CWS as it is or adjusting the CWS to min (CW×2 + 1, CWmax) in a case that both the ACK and the NACK are received; and
maintaining the CWS as it is in a case that the terminal has not received any feedback.

CW is a value before contention window adjustment, CWmin is a minimum value of a contention window, and CWmax is a maximum value of the contention window.

Optionally, the adjusting the CWS based on a received ACK and/or NACK includes at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2.

X, Y, Z1, and Z2 are all numbers greater than or equal to 0 and less than or equal to 1, or X, Y, Z1, and Z2 are all integers greater than or equal to 0, where CW is a value before contention window adjustment, CWmin is a minimum value of a contention window, and CWmax is a maximum value of the contention window.

Optionally, the adjusting the CWS based on all ACK and/or NACK feedbacks of a transport block TB includes at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals.

CW is a value before contention window adjustment, CWmin is a minimum value of a contention window, and CWmax is a maximum value of the contention window.

Optionally, in a case that the first transmission or the second transmission is the physical sidelink shared channel PSSCH unicast transmission, the adjusting a contention window size CWS based on a feedback of a transmission within a first reference duration includes at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not include a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal includes the retransmission and the transmission of the terminal is not within the time Tw after the reference duration of the earliest COT after the last update of the CWS.

Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window.

In embodiments of this application, a method for adjusting a CWS based on a feedback of a transmission within a first reference duration in a case that the first transmission or the second transmission is the unicast PSSCH transmission when the terminal accesses a channel by means of Type1 channel access is provided, so that an SL UE may reasonably adjust the CWS when an unlicensed band channel is accessed, thereby avoiding a transmission conflict and improving transmission efficiency.

The apparatus in embodiments of this application may be an electronic device, for example, an electronic device having an operating system, or may be a component in the electronic device, for example, an integrated circuit or a chip. The electronic device may be a terminal, or may be another device other than the terminal. For example, the terminal may include but is not limited to the types of the terminal 11 listed above, and another device may be a server, a network attached storage (Network Attached Storage, NAS), or the like. This is not specifically limited in embodiments of this application.

The contention window adjustment apparatus provided in this embodiment of this application can implement all processes implemented in the method embodiments of FIG. 2 to FIG. 8, and achieve the same technical effects. To avoid repetition, details are not described herein again.

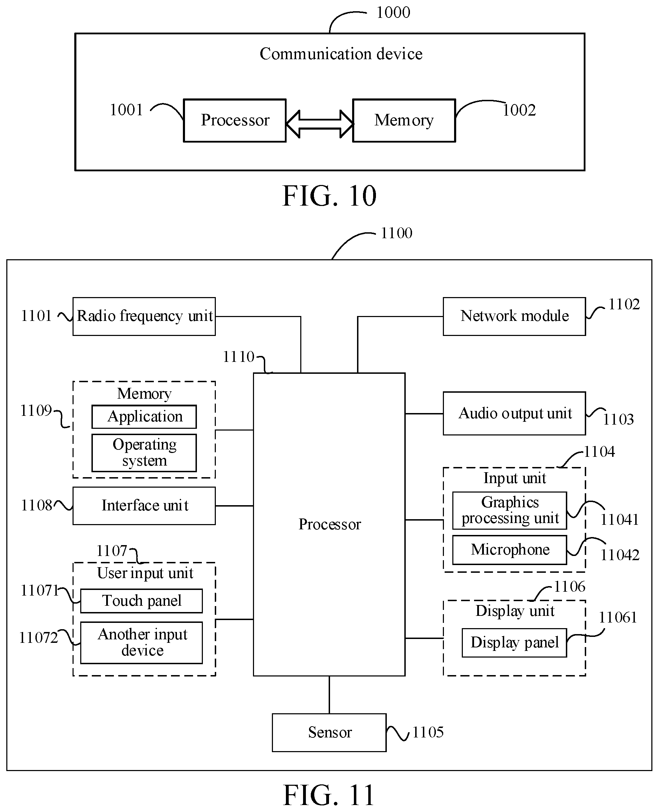

Optionally, as shown in FIG. 10, an embodiment of this application further provides a communication device 1000, including a processor 1001 and a memory 1002. The memory 1002 stores program or an instruction executable on the processor 1001. For example, when the communication device 1000 is a terminal, the program or the instruction, when executed by the processor 1001, implements the steps of the above contention window adjustment method embodiment, and can achieve the same technical effects. When the communication device 1000 is a network side device, the program or the instruction, when executed by the processor 1001, implements the steps of embodiments of the contention window adjustment method, and can achieve the same technical effects. To avoid repetition, details are not described herein again.

An embodiment of this application further provides a terminal, including a processor and a communication interface. The processor is configured to adjust a contention window size CWS based on a first transmission or a feedback of a transmission within a first reference duration when a terminal accesses a channel by means of Type1 channel access. The first reference duration includes the first transmission and/or a second transmission. The first transmission or the second transmission includes at least one of the following: a sidelink SL transmission based on a blind retransmission mechanism; a channel state information CSI request transmission or an inter-user equipment coordination request transmission; a physical sidelink feedback channel PSFCH transmission or a sidelink synchronization signal block S-SSB transmission; a NACK-only groupcast transmission; an ACK/NACK based groupcast transmission; and a physical sidelink shared channel PSSCH unicast transmission. The terminal embodiment corresponds to the foregoing terminal side method embodiment. The implementation processes and implementations of the foregoing method embodiment are all applicable to the terminal embodiment, and can achieve the same technical effect. Specifically, FIG. 11 is a schematic diagram of a hardware structure of a terminal for implementing an embodiment of this application.

The terminal 1100 includes but is not limited to at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (such as a battery) that supplies power to the components. The power supply may be logically connected to the processor 1110 through a power management system, thereby implementing functions such as management of charging, discharging, and power consumption through the power management system. The terminal structure shown in FIG. 11 constitutes no limitation on the terminal, and the terminal may include more or fewer components than those shown in the figure, or some merged components, or different component arrangements. Details are not described herein.

It should be noted that, in this embodiment of this application, the input unit 1104 may include a graphics processing unit (Graphics Processing Unit, GPU) 11041 and a microphone 11042. The graphics processing unit 11041 processes image data of a static picture or a video obtained by an image capture apparatus (for example, a camera) in a video capture mode or an image capture mode. The display unit 1106 may include a display panel 11061. The display panel 11061 may be configured in a form such as a liquid crystal display or an organic light-emitting diode. The user input unit 1107 includes at least one of a touch panel 11071 and another input device 11072. The touch panel 11071 is also referred to as a touch screen. The touch panel 11071 may include two parts: a touch detection apparatus and a touch controller. The another input device 11072 may include but is not limited to a physical keyboard, a function button (such as a volume control button or a power button), a trackball, a mouse, and a joystick. Details are not described herein.

In this embodiment of this application, the radio frequency unit 1101 receives downlink data from a network side device, and then may transmit the data to the processor 1110 for processing. In addition, the radio frequency unit 1101 may send uplink data to the network side device. Generally, the radio frequency unit 1101 includes but is not limited to an antenna, an amplifier, a transceiver, a coupler, a low noise amplifier, a duplexer, and the like.

The memory 1109 may be configured to store a software program or an instruction and various data. The memory 1109 may mainly include a first storage area storing a program or an instruction and a second storage area storing data. The first storage area may store an operating system, an application or an instruction required for at least one function (such as a sound playback function or an image playback function), and the like. In addition, the memory 1109 may include a volatile memory or a non-volatile memory, or the memory 1109 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous dynamic random access memory (Synch link DRAM, SLDRAM), and a direct rambus random access memory (Direct Rambus RAM, DRRAM). The memory 1109 in this embodiment of this application includes but is not limited to these and any other suitable types of memories.

The processor 1110 may include one or more processing units. Optionally, an application processor and a modem processor is integrated into the processor 1110. The application processor mainly processes operations related to an operating system, a user interface, an application, and the like. The modem processor mainly processes a wireless communication signal, for example, may be a baseband processor. It may be understood that the above modem processor may alternatively not be integrated into the processor 1110.

The processor 1110 is configured to adjust a contention window size CWS based on a first transmission or a feedback of a transmission within a first reference duration when a terminal accesses a channel by means of Type1 channel access. The first reference duration includes the first transmission and/or a second transmission. The first transmission or the second transmission includes at least one of the following: a sidelink SL transmission based on a blind retransmission mechanism; a channel state information CSI request transmission or an inter-user equipment coordination request transmission; a physical sidelink feedback channel PSFCH transmission or a sidelink synchronization signal block S-SSB transmission; a negative-acknowledgment NACK-only groupcast transmission; an acknowledgment/negative-acknowledgment ACK/NACK based groupcast transmission; and a physical sidelink shared channel PSSCH unicast transmission.

In embodiments of this application, when the terminal accesses the channel by means of the Type1 channel access, a new reference duration reference duration is defined for some transmissions such as the blind retransmission, the unicast transmission, and the groupcast transmission for the SL in the unlicensed band that have no feedback or special feedback. The CWS is adjusted based on the first transmission or the feedback of the transmission within the first reference duration, so that an SL UE may reasonably adjust the CWS when the channel in the unlicensed band is accessed, to avoid a transmission conflict and improve transmission efficiency.

Optionally, the first reference duration includes at least one of the following:
from a starting position of a first channel occupancy time COT to a first position;
from the starting position of the first COT to a second position;
from the starting position of the first COT to an earliest ending position among the first position and the second position;
a duration of a first transmission burst including the first transmission or the second transmission within the first COT; and
the first COT.

The first position is an end position of a first slot in which at least one of the first transmission or the second transmission completes transmission on all allocated resources, and the second position is an end position of the first transmission burst including the first transmission or the second transmission that completes transmission on all of the allocated resources.

The first COT is a COT before the channel is accessed by means of Type1 channel access.

Optionally, the second transmission follows the first transmission, and a type of the first transmission is different from a type of the second transmission.

Optionally, in a case that the first transmission is the sidelink SL transmission based on the blind retransmission mechanism, the adjusting a contention window size CWS based on a first transmission or a feedback of a transmission within a first reference duration includes at least one of the following:
maintaining the CWS as it is;
successively adjusting the CWS based on adjustment rules respectively corresponding to an ACK and a NACK, where each retransmission is regarded as a NACK, and an end of all retransmissions is regarded as an ACK; and
adjusting the CWS based on the feedback of the transmission within the first reference duration in a case that the second transmission includes the ACK/NACK based groupcast transmission or the physical sidelink shared channel PSSCH unicast transmission.

In embodiments of this application, a method for adjusting a CWS based on the first transmission or a feedback of a transmission within a first reference duration in a case that the first transmission is the sidelink SL transmission based on the blind retransmission mechanism when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, in a case that the first transmission is the channel state information CSI request transmission or the inter-user equipment coordination request transmission, the adjusting a contention window size CWS based on the first transmission includes at least one of the following:
adjusting the CWS to CWmin if a corresponding channel state information report CSI report or inter-user equipment coordination information Inter-UE coordination information is received;
maintaining the CWS as it is if a CSI report or Inter-UE coordination information has not been received within a CSI feedback window; and
adjusting the CWS to min (CW×2 + 1, CWmax) if the CSI report has not been received after a CSI feedback delay is elapsed or after the CSI feedback window times out.

CW is a value before contention window adjustment, CWmin is a minimum value of a contention window, and CWmax is a maximum value of the contention window.

Optionally, in a case that the first transmission is the physical sidelink feedback channel PSFCH transmission or the sidelink synchronization signal block S-SSB transmission, the adjusting the contention window size CWS based on the first transmission includes at least one of the following:
maintaining the CWS as it is or keeping the CWS always at CWmin, where CWmin is a minimum value of a contention window.

Optionally, in a case that the first transmission is the NACK-only groupcast transmission, the adjusting a contention window size CWS based on a first transmission or a feedback of a transmission within a first reference duration includes at least one of the following:
maintaining the CWS as it is;
adjusting the CWS based on a received NACK feedback;
adjusting the CWS based on the feedback of the transmission within the first reference duration in a case that the second transmission includes the ACK/NACK based groupcast transmission and/or the physical sidelink shared channel PSSCH unicast transmission; and
adjusting the CWS based on the received ACK and/or NACK, where the ACK is transmitted through a PSFCH resource different from the NACK.

In embodiments of this application, a method for adjusting a CWS based on a first transmission or a feedback of a transmission within a first reference duration in a case that the first transmission is a NACK-only groupcast transmission when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, in a case that the first transmission or the second transmission is the ACK/NACK based groupcast transmission, the adjusting a contention window size CWS based on a feedback of a transmission within a first reference duration includes at least one of the following:
adjusting the CWS based on the received ACK and/or NACK; and
adjusting the CWS based on all ACK and/or NACK feedbacks of a transport block TB.

In embodiments of this application, a method for adjusting a CWS based on a feedback of a transmission within a first reference duration in a case that the first transmission or the second transmission is the ACK/NACK based groupcast transmission when the terminal accesses a channel by means of Type1 channel access is provided, so that an SL UE may reasonably adjust the CWS when an unlicensed band channel is accessed, thereby avoiding a transmission conflict and improving transmission efficiency.

Optionally, the successively adjusting the CWS based on adjustment rules respectively corresponding to an ACK and a NACK includes at least one of the following:
adjusting the CWS to min (CW×2 + 1, CWmax) for each retransmission; and
adjusting the CWS to CWmin after all of the retransmissions come to an end.

CW is a value before contention window adjustment, CWmin is a minimum value of a contention window, and CWmax is a maximum value of the contention window.

Optionally, the adjusting the CWS based on a received NACK feedback includes at least one of the following:
adjusting the CWS to min (CW×2 + 1, CWmax) when the NACK is received; and
maintaining the CWS as it is when no feedback of the NACK-only groupcast transmission is received.

CW is a value before contention window adjustment, CWmin is a minimum value of a contention window, and CWmax is a maximum value of the contention window.

Optionally, the adjusting the CWS based on a received ACK and/or NACK includes at least one of the following:
adjusting the CWS to CWmin in a case that the ACK is received and the NACK has not been received;
adjusting the CWS to min (CW×2 + 1, CWmax) in a case that the NACK is received and the ACK has not been received;
maintaining the CWS as it is or adjusting the CWS to min (CW×2 + 1, CWmax) in a case that both the ACK and the NACK are received; and
maintaining the CWS as it is in a case that the terminal has not received any feedback.

CW is a value before contention window adjustment, CWmin is a minimum value of a contention window, and CWmax is a maximum value of the contention window.

Optionally, the adjusting the CWS based on a received ACK and/or NACK includes at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2.

X, Y, Z1, and Z2 are all numbers greater than or equal to 0 and less than or equal to 1, or X, Y, Z1, and Z2 are all integers greater than or equal to 0, where CW is a value before contention window adjustment, CWmin is a minimum value of a contention window, and CWmax is a maximum value of the contention window.

Optionally, the adjusting the CWS based on all ACK and/or NACK feedbacks of a transport block TB includes at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals.

CW is a value before contention window adjustment, CWmin is a minimum value of a contention window, and CWmax is a maximum value of the contention window.

Optionally, in a case that the first transmission or the second transmission is the physical sidelink shared channel PSSCH unicast transmission, the adjusting a contention window size CWS based on a feedback of a transmission within a first reference duration includes at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not include a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal includes the retransmission and the transmission of the terminal is not within the time Tw after the reference duration of the earliest COT after the last update of the CWS.

Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window.

In embodiments of this application, a method for adjusting a CWS based on a feedback of a transmission within a first reference duration in a case that the first transmission or the second transmission is the unicast PSSCH transmission when the terminal accesses a channel by means of Type1 channel access is provided, so that an SL UE may reasonably adjust the CWS when an unlicensed band channel is accessed, thereby avoiding a transmission conflict and improving transmission efficiency.

An embodiment of this application further provides a readable storage medium. The readable storage medium stores a program or an instruction. The program or the instruction, when executed by a processor, implements the processes of the above contention window adjustment method embodiment, and can achieve the same technical effects. To avoid repetition, details are not described herein again.

The processor is a processor in the terminal described in the above embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an instruction, to implement the processes of the above contention window adjustment method embodiment, and can achieve the same technical effects. To avoid repetition, details are not described herein again.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the above embodiments of the contention window adjustment method, and can achieve the same technical effects. To avoid repetition, details are not described herein again.

It should be noted that a term "comprise", "include", or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by a phrase "include one ... " does not exclude existence of an additional same element in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions involved. For example, the described method may be performed in an order different from the described order, and various steps may further be added, omitted, or combined. In addition, features described with reference to some examples may be combined in another example.

According to the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, an air conditioner, a network device, or the like) to perform the method in embodiments of this application.

Although embodiments of this application are described above with reference to the accompanying drawings, this application is not limited to the specific implementations described above. The foregoing specific implementations are illustrative but not restrictive. With the enlightenment of this application, a person of ordinary skill in the art may make many forms without departing from the concept of this application and the protection scope of the claims. These forms fall within the protection of this application.

## Claims

1. A contention window adjustment method, comprising:
adjusting a contention window size CWS based on a first transmission or a feedback of a transmission within a first reference duration when a terminal accesses a channel by means of Type1 channel access, wherein
the first reference duration comprises the first transmission and/or a second transmission, and
the first transmission or the second transmission comprises at least one of the following:
a sidelink SL transmission based on a blind retransmission mechanism;
a channel state information CSI request transmission or an inter-user equipment coordination request transmission;
a physical sidelink feedback channel PSFCH transmission or a sidelink synchronization signal block S-SSB transmission;
a negative-acknowledgment NACK-only groupcast transmission;
an acknowledgment/negative-acknowledgment ACK/NACK based groupcast transmission; and
a physical sidelink shared channel PSSCH unicast transmission.

2. The method according to claim 1, wherein the first reference duration comprises at least one of the following:
from a starting position of a first channel occupancy time COT to a first position;
from the starting position of the first COT to a second position;
from the starting position of the first COT to an earliest ending position among the first position and the second position;
a duration of a first transmission burst comprising the first transmission or the second transmission within the first COT; and
the first COT, wherein
the first position is an end position of a first slot in which at least one of the first transmission or the second transmission completes transmission on all allocated resources, and the second position is an end position of the first transmission burst comprising the first transmission or the second transmission that completes transmission on all of the allocated resources; and
the first COT is a COT before the channel is accessed by means of Type1 channel access.

3. The method according to claim 2, wherein the second transmission follows the first transmission, and a type of the first transmission is different from a type of the second transmission.

4. The method according to any one of claims 1 to 3, wherein in a case that the first transmission is the sidelink SL transmission based on the blind retransmission mechanism, the adjusting a contention window size CWS based on a first transmission or a feedback of a transmission within a first reference duration comprises at least one of the following:
maintaining the CWS as it is;
successively adjusting the CWS based on adjustment rules respectively corresponding to an ACK and a NACK, wherein each retransmission is regarded as a NACK, and an end of all retransmissions is regarded as an ACK; and
adjusting the CWS based on the feedback of the transmission within the first reference duration in a case that the second transmission comprises the ACK/NACK based groupcast transmission or the physical sidelink shared channel PSSCH unicast transmission.

5. The method according to claim 4, wherein the successively adjusting the CWS based on adjustment rules respectively corresponding to an ACK and a NACK comprises at least one of the following:
adjusting the CWS to min (CW×2 + 1, CWmax) for each retransmission; and
adjusting the CWS to CWmin after all of the retransmissions come to an end, wherein
CW is a value before contention window adjustment, CWmin is a minimum value of a contention window, and CWmax is a maximum value of the contention window.

6. The method according to claim 1, wherein in a case that the first transmission is the channel state information CSI request transmission or the inter-user equipment coordination request transmission, the adjusting a contention window size CWS based on the first transmission comprises at least one of the following:
adjusting the CWS to CWmin if a corresponding channel state information report CSI report or inter-user equipment coordination information Inter-UE coordination information is received;
maintaining the CWS as it is if a CSI report or Inter-UE coordination information has not been received within a CSI feedback window; and
adjusting the CWS to min (CW×2 + 1, CWmax) if the CSI report has not been received after a CSI feedback delay is elapsed or after the CSI feedback window times out, wherein
CW is a value before contention window adjustment, CWmin is a minimum value of a contention window, and CWmax is a maximum value of the contention window.

7. The method according to claim 1, wherein in a case that the first transmission is the physical sidelink feedback channel PSFCH transmission or the sidelink synchronization signal block S-SSB transmission, the adjusting the contention window size CWS based on the first transmission comprises at least one of the following:
maintaining the CWS as it is or keeping the CWS always at CWmin, wherein CWmin is a minimum value of a contention window.

8. The method according to any one of claims 1 to 3, wherein in a case that the first transmission is the NACK-only groupcast transmission, the adjusting a contention window size CWS based on a first transmission or a feedback of a transmission within a first reference duration comprises at least one of the following:
maintaining the CWS as it is;
adjusting the CWS based on a received NACK feedback;
adjusting the CWS based on the feedback of the transmission within the first reference duration in a case that the second transmission comprises the ACK/NACK based groupcast transmission and/or the physical sidelink shared channel PSSCH unicast transmission; and
adjusting the CWS based on the received ACK and/or NACK, wherein the ACK is transmitted through a PSFCH resource different from the NACK.

9. The method according to claim 8, wherein the adjusting the CWS based on a received NACK feedback comprises at least one of the following:
adjusting the CWS to min (CW×2 + 1, CWmax) when the NACK is received; and
maintaining the CWS as it is when no feedback of the NACK-only groupcast transmission is received, wherein
CW is a value before contention window adjustment, CWmin is a minimum value of a contention window, and CWmax is a maximum value of the contention window.

10. The method according to claim 8, wherein the adjusting the CWS based on a received ACK and/or NACK comprises at least one of the following:
adjusting the CWS to CWmin in a case that the ACK is received and the NACK has not been received;
adjusting the CWS to min (CW×2 + 1, CWmax) in a case that the NACK is received and the ACK has not been received;
maintaining the CWS as it is or adjusting the CWS to min (CW×2 + 1, CWmax) in a case that both the ACK and the NACK are received; and
maintaining the CWS as it is in a case that the terminal has not received any feedback, wherein
CW is a value before contention window adjustment, CWmin is a minimum value of a contention window, and CWmax is a maximum value of the contention window.

11. The method according to any one of claims 2 to 4 and claim 8, wherein in a case that the first transmission or the second transmission is the ACK/NACK based groupcast transmission, the adjusting a contention window size CWS based on a feedback of a transmission within a first reference duration comprises at least one of the following:
adjusting the CWS based on the received ACK and/or NACK; and
adjusting the CWS based on all ACK and/or NACK feedbacks of a transport block TB.

12. The method according to claim 11, wherein the adjusting the CWS based on a received ACK and/or NACK comprises at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2, wherein
X, Y, Z1, and Z2 are all numbers greater than or equal to 0 and less than or equal to 1, or X, Y, Z1, and Z2 are all integers greater than or equal to 0, wherein CW is a value before contention window adjustment, CWmin is a minimum value of a contention window, and CWmax is a maximum value of the contention window.

13. The method according to claim 11, wherein the adjusting the CWS based on all ACK and/or NACK feedbacks of a transport block TB comprises at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals, wherein
CW is a value before contention window adjustment, CWmin is a minimum value of a contention window, and CWmax is a maximum value of the contention window.

14. The method according to any one of claims 2 to 4 and claim 8, wherein in a case that the first transmission or the second transmission is the physical sidelink shared channel PSSCH unicast transmission, the adjusting a contention window size CWS based on a feedback of a transmission within a first reference duration comprises at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not comprise a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal comprises the retransmission and the transmission of the terminal is not within the time Tw after the reference duration of the earliest COT after the last update of the CWS, wherein
Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window.

15. A contention window adjustment apparatus, comprising:
an adjustment unit, configured to adjust a contention window size CWS based on a first transmission or a feedback of a transmission within a first reference duration when a terminal accesses a channel by means of Type1 channel access, wherein
the first reference duration comprises the first transmission and/or a second transmission, and
the first transmission or the second transmission comprises at least one of the following:
a sidelink SL transmission based on a blind retransmission mechanism;
a channel state information CSI request transmission or an inter-user equipment coordination request transmission;
a physical sidelink feedback channel PSFCH transmission or a sidelink synchronization signal block S-SSB transmission;
a negative-acknowledgment NACK-only groupcast transmission;
an acknowledgment/negative-acknowledgment ACK/NACK based groupcast transmission; and
a physical sidelink shared channel PSSCH unicast transmission.

16. The apparatus according to claim 15, wherein the first reference duration comprises at least one of the following:
from a starting position of a first channel occupancy time COT to a first position;
from the starting position of the first COT to a second position;
from the starting position of the first COT to an earliest ending position among the first position and the second position;
a duration of a first transmission burst comprising the first transmission or the second transmission within the first COT; and
the first COT, wherein
the first position is an end position of a first slot in which at least one of the first transmission or the second transmission completes transmission on all allocated resources, and the second position is an end position of the first transmission burst comprising the first transmission or the second transmission that completes transmission on all of the allocated resources; and
the first COT is a COT before the channel is accessed by means of Type1 channel access.

17. The apparatus according to claim 16, wherein the second transmission follows the first transmission, and a type of the first transmission is different from a type of the second transmission.

18. The apparatus according to any one of claims 15 to 17, wherein in a case that the first transmission is the sidelink SL transmission based on the blind retransmission mechanism, the adjusting a contention window size CWS based on a first transmission or a feedback of a transmission within a first reference duration comprises at least one of the following:
maintaining the CWS as it is;
successively adjusting the CWS based on adjustment rules respectively corresponding to an ACK and a NACK, wherein each retransmission is regarded as a NACK, and an end of all retransmissions is regarded as an ACK; and
adjusting the CWS based on the feedback of the transmission within the first reference duration in a case that the second transmission comprises the ACK/NACK based groupcast transmission or the physical sidelink shared channel PSSCH unicast transmission.

19. The apparatus according to claim 18, wherein the successively adjusting the CWS based on adjustment rules respectively corresponding to an ACK and a NACK comprises at least one of the following:
adjusting the CWS to min (CW×2 + 1, CWmax) for each retransmission; and
adjusting the CWS to CWmin after all of the retransmissions come to an end, wherein
CW is a value before contention window adjustment, CWmin is a minimum value of a contention window, and CWmax is a maximum value of the contention window.

20. The apparatus according to claim 15, wherein in a case that the first transmission is the channel state information CSI request transmission or the inter-user equipment coordination request transmission, the adjusting a contention window size CWS based on the first transmission comprises at least one of the following:
adjusting the CWS to CWmin if a corresponding channel state information report CSI report or inter-user equipment coordination information Inter-UE coordination information is received;
maintaining the CWS as it is if a CSI report or Inter-UE coordination information has not been received within a CSI feedback window; and
adjusting the CWS to min (CW×2 + 1, CWmax) if the CSI report has not been received after a CSI feedback delay is elapsed or after the CSI feedback window times out, wherein
CW is a value before contention window adjustment, CWmin is a minimum value of a contention window, and CWmax is a maximum value of the contention window.

21. The apparatus according to claim 15, wherein in a case that the first transmission is the physical sidelink feedback channel PSFCH transmission or the sidelink synchronization signal block S-SSB transmission, the adjusting the contention window size CWS based on the first transmission comprises at least one of the following:
maintaining the CWS as it is or keeping the CWS always at CWmin, wherein CWmin is a minimum value of a contention window.

22. The apparatus according to any one of claims 15 to 17, wherein in a case that the first transmission is the NACK-only groupcast transmission, the adjusting a contention window size CWS based on a first transmission or a feedback of a transmission within a first reference duration comprises at least one of the following:
maintaining the CWS as it is;
adjusting the CWS based on a received NACK feedback;
adjusting the CWS based on the feedback of the transmission within the first reference duration in a case that the second transmission comprises the ACK/NACK based groupcast transmission and/or the physical sidelink shared channel PSSCH unicast transmission; and
adjusting the CWS based on the received ACK and/or NACK, wherein the ACK is transmitted through a PSFCH resource different from the NACK.

23. The apparatus according to claim 22, wherein the adjusting the CWS based on a received NACK feedback comprises at least one of the following:
adjusting the CWS to min (CW×2 + 1, CWmax) when the NACK is received; and
maintaining the CWS as it is when no feedback of the NACK-only groupcast transmission is received, wherein
CW is a value before contention window adjustment, CWmin is a minimum value of a contention window, and CWmax is a maximum value of the contention window.

24. The apparatus according to claim 22, wherein the adjusting the CWS based on a received ACK and/or NACK comprises at least one of the following:
adjusting the CWS to CWmin in a case that the ACK is received and the NACK has not been received;
adjusting the CWS to min (CW×2 + 1, CWmax) in a case that the NACK is received and the ACK has not been received;
maintaining the CWS as it is or adjusting the CWS to min (CW×2 + 1, CWmax) in a case that both the ACK and the NACK are received; and
maintaining the CWS as it is in a case that the terminal has not received any feedback, wherein
CW is a value before contention window adjustment, CWmin is a minimum value of a contention window, and CWmax is a maximum value of the contention window.

25. The apparatus according to any one of claims 16 to 18 and claim 22, wherein in a case that the first transmission or the second transmission is the ACK/NACK based groupcast transmission, the adjusting a contention window size CWS based on a feedback of a transmission within a first reference duration comprises at least one of the following:
adjusting the CWS based on the received ACK and/or NACK; and
adjusting the CWS based on all ACK and/or NACK feedbacks of a transport block TB.

26. The apparatus according to claim 25, wherein the adjusting the CWS based on a received ACK and/or NACK comprises at least one of the following:
adjusting the CWS to CWmin in a case that the received ACK exceeds X;
adjusting the CWS to min (CW×2 + 1, CWmax) in a case that the received NACK exceeds Y; and
maintaining the CWS as it is in a case that the received ACK or NACK is in a range of Z1 to Z2, wherein
X, Y, Z1, and Z2 are all numbers greater than or equal to 0 and less than or equal to 1, or X, Y, Z1, and Z2 are all integers greater than or equal to 0, wherein CW is a value before contention window adjustment, CWmin is a minimum value of a contention window, and CWmax is a maximum value of the contention window.

27. The apparatus according to claim 25, wherein the adjusting the CWS based on all ACK and/or NACK feedbacks of a transport block TB comprises at least one of the following:
adjusting the CWS to CWmin in a case that all feedbacks of the TB are the ACK;
adjusting the CWS to min (CW×2 + 1, CWmax) in a case that at least one feedback of the TB is the NACK; and
adjusting the CWS to min (CW×2 + 1, CWmax) in a case that a total quantity of received ACKs is less than a quantity of receiving terminals, wherein
CW is a value before contention window adjustment, CWmin is a minimum value of a contention window, and CWmax is a maximum value of the contention window.

28. The apparatus according to any one of claims 16 to 18 and claim 22, wherein in a case that the first transmission or the second transmission is the physical sidelink shared channel PSSCH unicast transmission, the adjusting a contention window size CWS based on a feedback of a transmission within a first reference duration comprises at least one of the following:
adjusting the CWS to CWmin in a case that an HARQ-ACK feedback is received after a last update of the CWS and at least one ACK exists in an HARQ-ACK within a reference duration of a latest COT;
adjusting the CWS to min (CW×2 + 1, CWmax) in a case that the HARQ-ACK feedback is received after the last update of the CWS and no ACK exists in the HARQ-ACK within the reference duration of the latest COT;
maintaining the CWS as it is in a case that the HARQ-ACK feedback has not been received after the last update of the CWS, and a transmission of a terminal does not comprise a retransmission or the transmission of the terminal is within a time Tw after a reference duration of an earliest COT after the last update of the CWS; and
adjusting the CWS to min (CW×2 + 1, CWmax) in a case that the HARQ-ACK feedback has not been received after the last update of the CWS, and the transmission of the terminal comprises the retransmission and the transmission of the terminal is not within the time Tw after the reference duration of the earliest COT after the last update of the CWS, wherein
Tw = max (X ms, a length of a transmission burst starting from the reference duration of the earliest COT + 1 ms), X = 5 or 10, CW is a value before contention window adjustment, CWmin is a minimum value of a contention window, and CWmax is a maximum value of the contention window.

29. A terminal, comprising a processor and a memory, wherein the memory stores a program or an instruction executable in the processor, and the program or the instruction, when executed by the processor, implements the steps of the contention window adjustment method according to any one of claims 1 to 14.

30. A readable storage medium, storing a program and an instruction, wherein the program or the instruction, when executed by a processor, implements the steps of the contention window adjustment method according to any one of claims 1 to 14.
